# EUROPEAN PATENT APPLICATION

(11) **EP 1 564 172 A1**
(43) Date of publication of application: **17.08.2005**
(21) Application number: 05075304.5
(22) Date of filing: 08.02.2005
(51) Int. Cl.: B65H 57/02, B65H 57/24, A01D 59/06, A01F 15/14, B30B 9/30

(54) **Steel wire guide**

(30) Priority: 16.02.2004 NL 1025496
(71) Applicant: BOA Systems B.V., 7547 BG Enschede (NL)
(72) Inventor: Pauwels, Richard, 7609 EG Almelo (NL); Vos, Dirk Jacob, 9646 BD Veendam (NL)
(74) Representative: 't Jong, Bastiaan Jacob

(57) **Abstract**

The invention relates to a guide (8) for guiding a steel wire (10) from a first direction to a second direction, which guide comprises a stationary curved guide surface (11), wherein the guide surface comprises ceramic.

The invention further relates to a bale press for compressing loose material, such as paper, plastic or domestic refuse, into bales, which bale press comprises:
- a press channel with an inlet opening for tipping loose material into the press channel;
- a press ram movable from a first side into the press channel for the purpose of compressing the loose material into a bale in the channel;
- binding means for binding the compressed bale with steel wire, wherein the binding means comprise guide means for guiding steel wire along the bale and comprise reciprocally movable needles for carrying along steel wires so as to place the steel wires round and to bind the compressed bale, wherein the movable needles comprise a needle head (8) with a recess (10) extending at least transversely of the direction of movement, and wherein a ceramic guide surface (11) is arranged in the recess (10).

## Description

The invention relates to a guide for guiding a steel wire from a first direction to a second direction.

Steel wire guides are used in many applications. The steel wire guide must herein cause the least possible friction between the guide and the steel wire, since wear will otherwise be considerable. Rollers are therefore often used along which the steel wire can run. It is however important here that the roller is freely rotatable and does not become jammed, since if the roller jams a sliding contact then occurs between the steel wire and the roller, and the friction between the two elements is increased considerably, whereby the roller will wear very rapidly and will have to be replaced very quickly.

When steel wire guides are used in a dirty environment, there is a high risk of these rollers becoming jammed.

It is now an object of the invention to provide a guide wherein the above stated drawback is alleviated, or even obviated. This object is achieved with a guide according to the invention, which guide comprises a stationary curved guide surface, wherein the guide surface comprises ceramic.

It has been found that steel wire slides easily over ceramic, while the ceramic is subjected to little wear thereby. It is therefore possible to provide a reliable guide wherein the wear to the guide surface is minimized.

In a preferred embodiment of the guide according to the invention, the curvature of the guide surface runs at least from the first direction to the second direction. The steel wire is therefore supported by a ceramic surface over the whole contact face between steel wire and guide.

In a preferred embodiment of the guide according to the invention, the guide surface has a part-cylinder shape. Such a guide of part-cylinder shape is similar to a roller, and can therefore be readily fitted into existing devices.

In the field of waste treatment plants, and particularly in the field of bale pressing, there are great problems in the present plant with jamming of steel wire guides. In a bale press waste in the form of loose material is tipped into a press channel and there compressed into a bale by means of a press ram. In order to prevent a compressed bale falling apart again, it is bound with a number of steel wires. For this purpose the bale is pressed against tensioned wires so that the steel wires are wound along three sides of the bale as the bale is shifted along. The steel wire is subsequently carried upward again by means of a needle, and the two outer ends of the steel wire are twisted together so that the steel wire is fixed around the compressed bale. Particularly when the steel wire is pulled upward by the needle, great forces occur on the steel wire guides, and in particular on the guide in the needle heads. Steel rollers, which must guide the steel wire, are normally arranged in these needle heads in known plant. However, in view of the very dirty environment - the needles are sometimes pushed through the compressed bales - it is a frequent occurrence for the steel rollers to become jammed, thereby resulting in a direct steel on steel contact and very rapid wear of the rollers. It is now a further object of the invention to provide a bale press wherein these said drawbacks are alleviated or even obviated.

This object is achieved with a bale press for compressing loose material, such as paper, plastic or domestic refuse, into bales, which bale press comprises:
- a press channel with an inlet opening for tipping loose material into the press channel;
- a press ram movable from a first side into the press channel for the purpose of compressing the loose material into a bale in the channel;
- binding means for binding the compressed bale with steel wire, wherein the binding means comprise guide means for guiding steel wire along the bale and comprise reciprocally movable needles for carrying along steel wires so as to place the steel wires round and to bind the compressed bale, wherein the movable needles comprise a needle head with a recess extending at least transversely of the direction of movement, and wherein a ceramic guide surface is arranged in the recess.

In a preferred embodiment of the bale press according to the invention, the ceramic guide surface of the recess has a part-cylinder shape. Existing plant can hereby be readily modified by replacing the usual steel rollers with a ceramic part of part-cylinder shape arranged at this position.

In yet another embodiment of the bale press according to the invention, the guide means comprise at least one guide according to the invention. In addition to being guided in the needle head, the steel wire is guided at a plurality of positions in a bale press. In order to provide a more reliable bale press, and wherein the maintenance interval can be extended, it is advantageous according to the invention to likewise provide other guides with ceramic guide surfaces.

These and other features of the invention will be further elucidated with reference to the accompanying drawings.
Figure 1 shows in perspective view and in schematic manner a bale press according to the invention.
Figure 2 shows a perspective view of a detail of the needles of the bale press of figure 1.
Figure 3 shows a side view of a needle head of a bale press according to figure 2.
Figure 4 shows a perspective view of another detail of the bale press of figure 1.
Figure 5 shows a steel wire guide according to the invention which can be applied in the bale press of figure 1.
Figure 6 shows a second steel wire guide according to the invention.

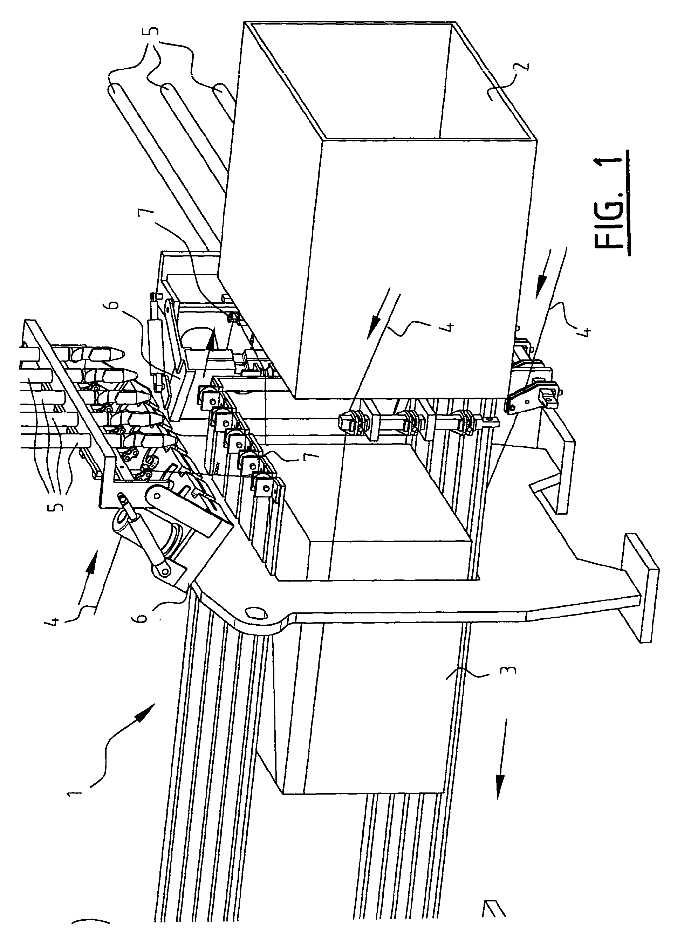

Figure 1 shows a bale press 1 according to the invention. This bale press 1 has a press channel 2 in which a bale of loose material 3 is compressed. This compressed bale 3 is then carried against a number of steel wires 4 such that the steel wires are wound along three sides of the compressed bale.

Bale press 1 further has needles 5 with which the steel wires can be pulled along the sides not yet enclosed by steel wires.

Bale press 1 further has a binding device 6 with which the ends of the steel wires can be cut through. The severed wires are then twisted together to form a so-called twist, and the bale can be removed from the apparatus. There then remains a twist in the steel wire 4, so that a following bale can once again be tied with steel wires.

The steel wires are guided by, among others, guides 7.

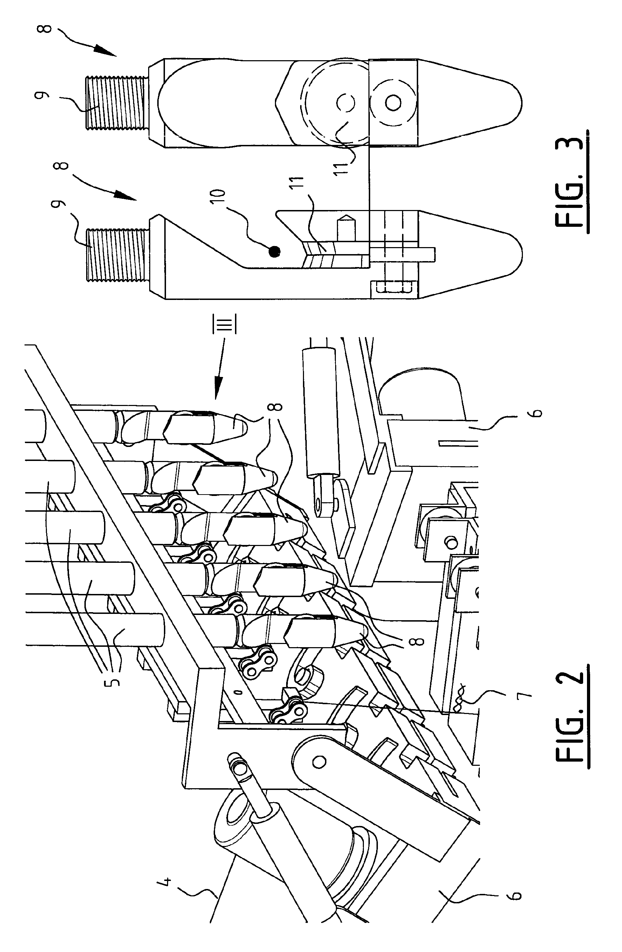

In figure 2 this twist can be seen more clearly and needles 5 are shown in more detail. Each needle 5 has a needle head 8, which in turn is shown in more detail in figure 3. Needle head 8 is fastened to the rods of needles 5 by means of a screw thread 9. This needle head 9 has a recess 10 extending transversely of the direction of movement of needle 5. A steel wire 4 can come to lie in this recess 10 so that the needle head can pull the steel wire 4 upward. Arranged in the recess is a guide part 11 which according to the invention is ceramic. The guide part 11 here has a part-cylinder shape.

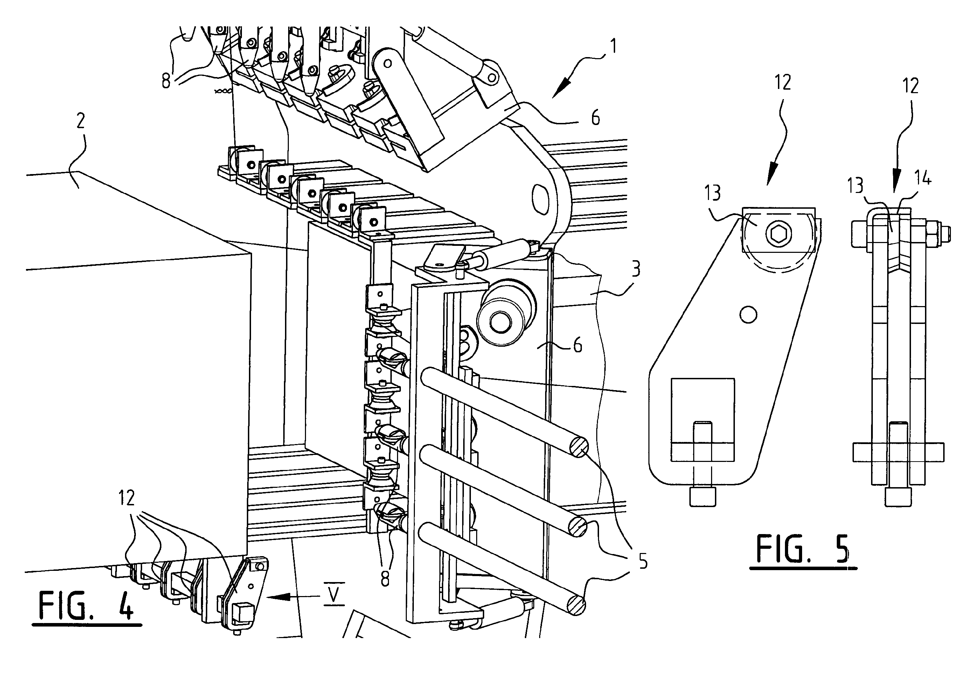

Figure 4 shows apparatus 1 in perspective from another viewpoint. Steel wire guides 12 are arranged on the underside of press channel 2. The steel wire 4 runs along these guides 12 which guide the steel wires on the underside after a bale has passed over. The steel wire is then pulled upward from the bottom by means of needle heads 8 arranged on the top side of apparatus 1. During this upward pulling great forces are acting on this steel wire guide 12 as well as on needle heads 8. In this embodiment these steel wire guides 12, as shown in figure 5, are likewise provided with guide parts 13 made of ceramic material. In existing apparatus a steel roller is usually arranged here. In order to prevent possible rotation of this guide part 13 of part-cylinder shape, a bent plate 14 is arranged on steel wire guide 12.

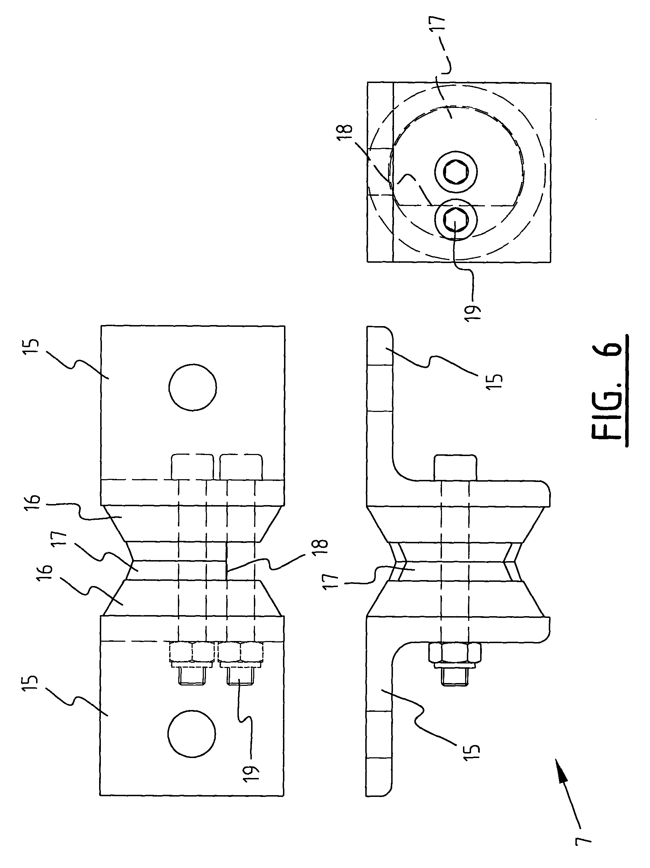

Figure 6 shows steel wire guide 7 in more detail. Guide 7 has two fixing brackets 15. Two chamfered spacer rings 16, having therebetween a ceramic guide part 17, are placed between fixing brackets 15. So as to prevent rotation of guide part 17, this latter is provided with a locking face 18 which co-acts with a locking pin 19.

## Claims

1. Guide for guiding a steel wire from a first direction to a second direction, which guide comprises a stationary curved guide surface, wherein the guide surface comprises ceramic.

2. Guide as claimed in claim 1, wherein the curvature of the guide surface runs at least from the first direction to the second direction.

3. Guide as claimed in claim 1 or 2, wherein the guide surface has a part-cylinder shape.

4. Bale press for compressing loose material, such as paper, plastic or domestic refuse, into bales, which bale press comprises:
- a press channel with an inlet opening for tipping loose material into the press channel;
- a press ram movable from a first side into the press channel for the purpose of compressing the loose material into a bale in the channel;
- binding means for binding the compressed bale with steel wire, wherein the binding means comprise guide means for guiding steel wire along the bale and comprise reciprocally movable needles for carrying along steel wires so as to place the steel wires round and to bind the compressed bale, wherein the movable needles comprise a needle head with a recess extending at least transversely of the direction of movement, and wherein a ceramic guide surface is arranged in the recess.

5. Bale press as claimed in claim 4, wherein the ceramic guide surface of the recess has a part-cylinder shape.

6. Bale press as claimed in claim 4 or 5, wherein the guide means comprise at least one guide as claimed in any of the claims 1-3.
